# EUROPÄISCHE PATENTSCHRIFT

(11) **EP 0 343 457 B1**
(45) Veröffentlichungstag und Bekanntmachung des Hinweises auf die Patenterteilung: **05.05.1993**
(21) Anmeldenummer: 89108606.8
(22) Anmeldetag: 12.05.1989
(51) Int. Cl.: H02K 1/22, H02K 17/16, H02K 21/12

(54) **Durch ein homopolares Magnetfeld vormagnetisierbarer Läufer einer elektrischen Wechselpolmaschine**
Electric heteropolar machine rotor that ist premagnetizable by am homopolar magnetic field
Rotor de génératrice à pôles alternés prémagnétisable par un champ magnétique homopolaire

(30) Priorität: 24.05.1988 DE 3817595
(43) Veröffentlichungstag der Anmeldung: 29.11.1989
(73) Patentinhaber: SIEMENS AKTIENGESELLSCHAFT, 80333 München (DE)
(72) Erfinder: Rosenberg, Heinz, Dipl.-Ing., A-2752 Wöllersdorf (AT)

(56) Entgegenhaltungen:
- CH-A- 160 270
- DE-A- 3 522 525

## Beschreibung

Die Erfindung betrifft einen durch ein homopolares Magnetfeld vormagnetisierbaren Läufer einer elektrischen Wechselpolmaschine. Der Effekt einer solchen Vormagnetisierung, nämlich eine steuerbare Schwächung der induzierenden Magnetflüsse, wurde bisher in den bereits von diesen Magnetflüssen allein bis zu einem gewissen Grade gesättigten Ständer- und/oder Läuferzähnen einer Maschine dadurch bewirkt, daß eine homopolare Durchflutung die zu ihr gegensinnigen induzierenden Magnetflüsse stärker schwächt, als sie die zu ihr gleichsinnigen Magnetflüsse verstärkt, wodurch die Summe dieser Magnetflüsse verringert wird. Nun sind Länge, Gestalt und Querschnitt von Ständer- und Läuferzähnen einer Maschine im wesentlichen durch die zwischen ihnen unterzubringenden Wicklungen sowie durch konstruktive Bedingungen bestimmt und können daher nicht für einen gewünschten Feldschwächungseffekt durch ein homopolares Magnetfeld optimiert werden. Dies bedingt vielfach zur Erzielung einer vorgegebenen Feldschwächung allein mittels der genannten Zähne eine sehr hohe homopolare Durchflutung und damit entsprechenden Raumbedarf und Kostenaufwand sowie große Verlustleistung der Wicklung zur Erzeugung dieser Durchflutung.

Der Erfindung liegt die Aufgabe zugrunde, einen Läufer der eingangs beschriebenen Art konstruktiv so auszubilden, daß ein möglichst optimaler Feldschwächungseffekt erreicht wird.

Die Lösung der gestellten Aufgabe gelingt nach der Erfindung dadurch, daß der Läufer im Inneren in vorwiegend radial gerichtete Magnetflußbahnen unterteilt ist, in denen induzierende und homopolare Magnetflüsse parallel überlagert verlaufen und die vorzugsweise mit parallelen Flanken ausgebildeten Magnetflußbahnen mit solchem Querschnitt versehen sind, daß sie durch die induzierenden Magnetflüsse allein bereits bis zum Sättigungsbeginn magnetisiert sind. Derartige Magnetflußbahnen können allein nach den Erfordernissen für die gewünschte Feldschwächung ausgelegt werden.

Anhand in der Zeichnung dargestellter Ausführungsbeispiele wird die Erfindung nachstehend näher erläutert. Es zeigt:
- FIG 1: einen Läuferquerschnitt einer Asynchronmaschine,
- FIG 2: einen Läuferquerschnitt einer permanentmagneterregten Synchronmaschine,
- FIG 3: eine andere Ausbildung des Läufers einer permanentmagneterregten Synchronmaschine.

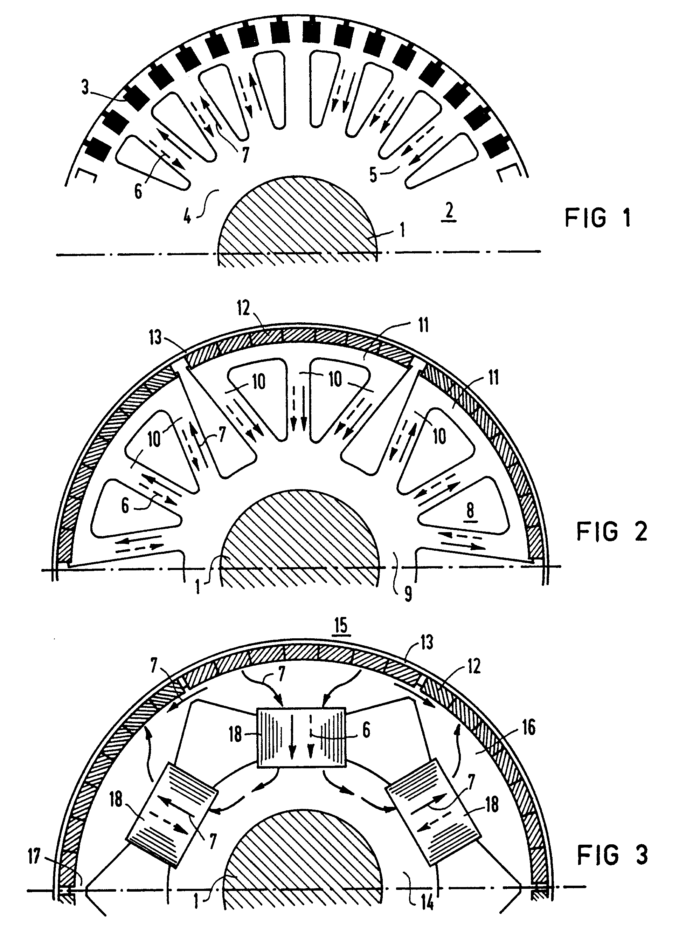

Fig 1 stellt das auf der Welle 1 sitzende Blechpaket 2 des Läufers einer Asynchronmaschine mit gegossenem Kurzschlußkäfig 3 dar. Zwischen der Nut-Zahnschicht und dem Läuferjoch 4 ist das Blechpaket 2 in radiale parallelflankige Magnetflußbahnen 5 unterteilt, in denen die homopolaren und ein Großteil der induzierenden Magnetflüsse parallel überlagert verlaufen. Die durch gestrichelte Pfeile 6 angedeuteten homopolaren Magnetflüsse haben in allen Magnetflußbahnen 5 die gleiche Richtung und treten in die Welle 1 ein, um von da aus z.B. durch Lagerschild und Gehäuse der Maschine und dann durch das Ständerblechpaket und den Luftspalt der Maschine ihren Weg zu nehmen. Die induzierenden Magnetflüsse wechseln gemäß den voll gezeichneten Pfeilen 7 von Pol zu Pol in den Magnetflußbahnen 5 ihre Richtung. Durch passende Bemessung von Länge und Querschnitt der Magnetflußbahnen 5 ist jener durch die induzierenden Magnetflüsse allein bewirkte Sättigungsgrad dieser Magnetflußbahnen 5 erzielbar, der hinsichtlich der für eine gewünschte Feldschwächung erforderlichen homopolaren Durchflutung ein Optimum ergibt.

Die FIG 2 zeigt den Läufer einer sechspoligen permanentmagneterregten Synchronmaschine. Das auf der Welle 1 angeordnete Läuferpaket 8 ist in sechs vom Läuferjoch 9 ausgehende Pole gegliedert, von denen jeder drei Magnetflußbahnen 10 aufweist, die in einem Polschuh 11 münden. Am Umfang der Polschuhe 11 sind quaderförmige Permanentmagnete 12 angeordnet und durch eine Bandage 13 gehalten. Die von den Permanentmagneten 12 erzeugten induzierenden und die homopolaren Magnetflüsse sind in den Magnetflußbahnen 10 gemäß den Pfeilen 7 und 6 in gleicher Weise überlagert, wie in den Magnetflußbahnen 5 des in FIG 1 gezeigten Läufers.

Bei der in FIG 3 dargestellten Ausbildung des Läufers einer permanentmagneterregten Synchronmaschine ist ein auf der Welle 1 sitzendes Läuferjoch 14 von einem äußeren Blechpaket 15 radial getrennt. Dieses besteht aus Polschuhen 16, die durch radial schmale Stege 17 verbunden sind. Am Umfang der Polschuhe 16 sind die quaderförmigen Permanentmagnete 12 mit der Bandage 13 befestigt. Ein kleiner Teil der durch die voll gezeichneten Pfeile 7 gekennzeichneten, von den Permanentmagneten 12 erzeugten induzierenden Magnetflüsse verläuft durch die Stege 17. Der größte Teil dieser Magnetflüsse nimmt seinen Weg radial durch zwischen den Polschuhen 16 und dem Läuferjoch 14 angeordnete Blechpaketblöcke 18, die im Hinblick auf ihre Montage parallel zur Welle 1 geblecht sind. Die Blechpaketblöcke 18 bestehen aus einem Werkstoff mit rechteckiger Hystereseschleife und sind so bemessen, daß sie von den induzierenden Magnetflüssen (Pfeile 7) allein bis zum Sättigungsknick des Werkstoffes magnetisiert werden. Da dies nur eine sehr geringe Durchflutung erfordert, wird ein Großteil jenes Aufwandes für die Permanentmagnete 12, der bei der Anordnung nach FIG 2 für die Sättigung der Magnetflußbahnen 10 erforderlich ist, eingespart. Eine homopolare Durchflutung (Pfeile 6) wird in den Blechpaketblöcken 18 bei drei Polen gleichsinnig und bei den anderen drei Polen gegensinnig zu den induzierenden Magnetflüssen (Pfeile 7), was die erläuterte Feldschwächung ergibt. Sie ist hier deshalb sehr wirksam, weil bei bis zum Sättigungsknick magnetisierten Werkstoffen mit rechteckiger Hystereseschleife eine gleichsinnige Zusatzdurchflutung praktisch keine Flußverstärkung ergibt, dagegen bereits eine geringe gegensinnige Durchflutung eine starke Flußminderung bewirkt.

## Patentansprüche

1. Durch ein homopolares Magnetfeld vormagnetisierbarer Läufer einer elektrischen Wechselpolmaschine, **dadurch gekennzeichnet,** daß der Läufer im Inneren in vorwiegend radialgerichtete Magnetflußbahnen (5, 10, 18) unterteilt ist, in denen induzierende und homopolare Magnetflüsse (Pfeile 7 und 6) parallel überlagert verlaufen, und die vorzugsweise mit parallelen Flanken ausgebildeten Magnetflußbahnen (5, 10, 18) mit solchen Querschnitten versehen sind, daß sie von den induzierenden Magnetflüssen (Pfeile 7) allein bereits bis zum Sättigungsbeginn magnetisiert sind.

2. Läufer nach Anspruch 1, **dadurch gekennzeichnet,** daß Magnetflußbahnen (18), in denen induzierende und homopolare Magnetflüsse (Pfeile 7 und 6) parallel überlagert verlaufen, aus einem Werkstoff mit rechteckiger Hystereseschleife bestehen und mit parallelen Flanken ausgebildet sowie ferner mit solchem Querschnitt versehen sind, daß sie von den induzierenden Magnetflüssen (Pfeile 7) allein bis zum Sättigungsknick magnetisiert sind.

## Claims

1. A rotor of an electrical heteropolar machine premagnetisable by means of a homopolar magnetic field, characterised in that the rotor is divided inside into predominantly radially directed magnetic flux paths (5, 10, 18) in which inducing and homopolar magnetic fluxes (arrows 7 and 6) extend superimposed in parallel, and the magnetic flux paths (5, 10, 18), preferably constructed with parallel flanks, are provided with cross sections such that they are magnetised by the inducing magnetic fluxes (arrows 7) only up to the beginning of saturation.

2. Rotor according to claim 1, characterised in that magnetic flux paths (18), in which inducing and homopolar magnetic fluxes (arrows 7 and 6) extend superimposed in parallel, comprise material with a rectangular hysteresis loop and are constructed with parallel flanks and provided further with a cross-section such that they are magnetised by the inducing magnetic fluxes (arrows 7) only up to the saturation bend.

## Revendications

1. Rotor, qui peut être préaimanté par un champ magnétique homopolaire, d'une génératrice à pôles alternés, caractérisé par le fait que le rotor est subdivisé intérieurement selon des pistes (5,10,18) de circulation des flux magnétiques, qui sont dirigées essentiellement radialement et dans lesquelles des flux magnétiques inducteurs et homopolaires (flèches 7 et 6) sont superposés et parallèles, et les pistes (5,10,18) de circulation des flux magnétiques, réalisées de préférence avec des flancs parallèles, possèdent des sections transversales telles qu'elles sont aimantées seulement par les flux magnétiques inducteurs (flèche 7) déjà au début de la saturation.

2. Rotor suivant la revendication 1, caractérisé par le fait que les pistes (18) de circulation des flux magnétiques, dans lesquelles des flux magnétiques inducteurs et homopolaires (flèches 7 et 6) sont parallèles et superposés, sont réalisées en un matériau possédant une boucle d'hystérésis rectangulaire et sont formées avec des flancs parallèles et sont en outre pourvues d'une section transversale telle qu'elles sont aimantées par les flux magnétiques inducteurs (flèches 7) uniquement jusqu'au coude de la saturation.
